# EUROPEAN PATENT SPECIFICATION

(11) **EP 3 979 077 B1**
(45) Date of publication and mention of the grant of the patent: **14.06.2023**
(21) Application number: 21197289.8
(22) Date of filing: 16.09.2021
(51) Int. Cl.: G06F 11/14

(54) **DATA CENTER BACKUP AT THE EDGE**
DATENZENTRALENSICHERUNG AM RAND
SAUVEGARDE DE CENTRE DE DONNÉES À LA PÉRIPHÉRIE

(30) Priority: 17.09.2020 US 202017024296
(43) Date of publication of application: 06.04.2022
(73) Proprietor: EMC IP Holding Company LLC, Hopkinton, MA 01748 (US)
(72) Inventor: Saad, Yossef, 55900 Ganei Tikva (IL); Wolfson, Kfir, Beer Sheva (IL)
(74) Representative: FRKelly

(56) References cited:
- US-A1- 2013 110 778
- US-A1- 2014 067 763
- US-B1- 6 505 216
- US-B1- 9 753 814

## Description

### FIELD OF THE INVENTION

Embodiments of the present invention generally relate to data protection processes, including data backup. More particularly, at least some embodiments of the invention relate to systems, hardware, software, computer-readable media, and methods for leveraging underutilized edge storage capabilities.

### BACKGROUND

Data centers typically back up their data locally, to support fast recovery, and remotely, to enable disaster recovery operations. The remote backup is either stored on a secondary on-premises site, or on the cloud. However, both of these options cost money to the organization, either because the organization has to a secondary storage site, or because the organization has to pay a cloud provider for data storage.

US 6 505 216 relates to mechanisms and techniques that provide the ability to backup and restore a file between a backup server and a data storage system using multiple trails of data for the same file.

US 2013/110778 relates to a system that distributes data for a distributed filesystem across multiple cloud storage systems. Two or more cloud controllers collectively manage distributed filesystem data that is stored in one or more cloud storage systems; the cloud controllers cache and ensure data consistency for the stored data. Whenever each cloud controller receives new data from a client, it outputs an incremental metadata snapshot for the new data that is propagated to the other cloud controllers and an incremental data snapshot containing the new data that is sent to a cloud storage system. During operation, data stored in the distributed filesystem can be distributed across two or more cloud storage systems to optimize performance and/or cost for the distributed filesystem.

2014/0067763 relates to a method for recovering a virtual machine comprising the steps of selecting a first backup copy of a virtual machine in a first data store, selecting a second data store; enabling use of the virtual machine by reading from the first data store and writing to the second data store, selecting a second backup copy of the virtual machine, and migrating the virtual machine from the second backup copy to the second data store.

US 9 753 814 relates to a method for backing up client data at a datacenter. Initially, an incremental backup is received from a client and stored at the datacenter. Next, a table of contents for the incremental backup is created, and differences identified between the incremental backup and a dataset previously stored at the datacenter. The offsets imposed by any new or modified blocks present in the incremental backup can then be identified and recorded, and used to identify respective data ranges in the incremental backup for any new and modified blocks, which data ranges can then be recorded. Next, a reference block can be created for each block of the previously stored dataset that was not modified in the incremental backup. The reference block can then be stored at the datacenter in association with the incremental backup.

### SUMMARY

The present invention is defined in appended independent claims 1 and 11 to which reference should be made. Preferred embodiments of the invention are set out in the appended dependent claims.

### BRIEF DESCRIPTION OF THE DRAWINGS

In order to describe the manner in which at least some of the advantages and features of the invention may be obtained, a more particular description of embodiments of the invention will be rendered by reference to specific embodiments thereof which are illustrated in the appended drawings. Understanding that these drawings depict only typical embodiments of the invention and are not therefore to be considered to be limiting of its scope, embodiments of the invention will be described and explained with additional specificity and detail through the use of the accompanying drawings.
Figure 1 discloses aspects of an example operating environment.
Figure 2 discloses aspects of some example methods.
Figure 3 discloses aspects of an example computing entity.

### DETAILED DESCRIPTION OF SOME EXAMPLE EMBODIMENTS

Embodiments of the present invention generally relate to data protection processes, such as data backup. More particularly, at least some embodiments of the invention relate to systems, hardware, software, computer-readable media, and methods for leveraging underutilized edge storage capabilities.

In modern information technology (IT) environments, a significant portion of the compute and storage infrastructure is being deployed at the edge. While the "edge" may be perceived by some as including, or taking the form of, one or more edge nodes such as a consumer edge device, such as a connected car, a home appliance or a smartphone, in the Industrial Internet of Things (IIoT) segment of technology, an "edge" may refer to a factory, a retail store such as a Walmart, or a cell tower. In such IloT edge locations, a significant infrastructure may be deployed which may include local compute and storage devices at numerous geographically dispersed locations. The aggregation of the storage capacity from the huge number of such "industrial" edge locations may provide a significant amount of unutilized, or underutilized, storage resources.

Accordingly, example embodiments of the invention embrace, among other things, systems and methods for defining and performing a "reverse backup" in which, in some examples, data stored at a datacenter is backed up at one or more edge nodes. This reverse backup may be performed alone, or in combination with the backup of data from edge nodes to the datacenter. In some embodiments, the edge nodes and the datacenter may serve to back each other up.

In accordance with the invention, a datacenter backs up its data to one or more edge nodes, thereby storing the datacenter data in a distributed fashion across multiple edge sites. In this way, the excess storage capacity that may be collectively provided across the group of edge nodes may be employed to store the datacenter data. Part or all of the datacenter data may additionally, or alternatively, be backed up to a secondary data center, and/or to a cloud storage site, or other site(s).

Embodiments of the invention, such as the examples disclosed herein, may be beneficial in a variety of respects. For example, and as will be apparent from the present disclosure, one or more embodiments of the invention may provide one or more advantageous and unexpected effects, in any combination, some examples of which are set forth below. It should be noted that such effects are neither intended, nor should be construed, to limit the scope of the claimed invention in any way. It should further be noted that nothing herein should be construed as constituting an essential or indispensable element of any invention or embodiment. Rather, various aspects of the disclosed embodiments may be combined in a variety of ways so as to define yet further embodiments. Such further embodiments are considered as being within the scope of this disclosure. As well, none of the embodiments embraced within the scope of this disclosure should be construed as resolving, or being limited to the resolution of, any particular problem(s). Nor should any such embodiments be construed to implement, or be limited to implementation of, any particular technical effect(s) or solution(s). Finally, it is not required that any embodiment implement any of the advantageous and unexpected effects disclosed herein.

In particular, one advantageous aspect of at least some embodiments of the invention is that such embodiments may be cost effective insofar as they leverage the aggregate unused storage capacity of one or more edge nodes, and thereby avoid the need to purchase additional storage capacity and/or pay for the use of storage. An embodiment of the invention may be advantageous in that it may enable a relatively higher degree of resilience in the data, since the data may be distributed across many sites. Further, because enterprise data may be stored on sites and equipment already owned and controlled by the enterprise, data security may be enhanced relative to a case where the enterprise data is stored elsewhere, such as a public cloud environment.

### A. General Aspects of Example Operating Environments

The following is a discussion of aspects of example operating environments for various embodiments of the invention. This discussion is not intended to limit the scope of the invention, or the applicability of the embodiments, in any way.

In general, embodiments of the invention may be implemented in connection with systems, software, and components, that individually and/or collectively implement, and/or cause the implementation of, operations which may include, but are not limited to, data read/write/delete operations, data deduplication operations, data backup operations, data restore operations, data cloning operations, data archiving operations, and disaster recovery operations. More generally, the scope of the invention embraces any operating environment in which the disclosed concepts may be useful.

At least some embodiments of the invention provide for the implementation of the disclosed functionality in existing backup platforms, examples of which include the Dell-EMC NetWorker and Avamar platforms and associated backup software, and storage environments such as the Dell-EMC DataDomain storage environment. In general however, the scope of the invention is not limited to any particular data backup platform or data storage environment.

New and/or modified data collected and/or generated in connection with some embodiments, may be stored in a data protection environment that may take the form of a public or private cloud storage environment, an on-premises storage environment, hybrid storage environments that include public and private elements, and enterprise environments that may include one or more IIoT edge nodes. Any of these example environments, may be partly, or completely, virtualized. In addition to one or more IloT edge nodes, an example storage environment may comprise a public, or private, datacenter which communicates with the IIoT edge nodes and is operable to service read, write, delete, backup, restore, and/or cloning, operations initiated by one or more clients or other elements of the operating environment. Where a backup comprises groups of data with different respective characteristics, that data may be allocated, and stored, to different respective targets in the storage environment, where the targets each correspond to a data group having one or more particular characteristics.

Example cloud computing environments, which may or may not be public, include storage environments that may provide data protection functionality for one or more clients. Another example of a cloud computing environment is one in which processing, data protection, and other, services may be performed on behalf of one or more clients. Some example cloud computing environments in connection with which embodiments of the invention may be employed include, but are not limited to, Microsoft Azure, Amazon AWS, Dell EMC Cloud Storage Services, and Google Cloud. More generally however, the scope of the invention is not limited to employment of any particular type or implementation of cloud computing environment.

In addition to the cloud environment, the operating environment may also include one or more clients that are capable of collecting, modifying, and creating, data. As such, a particular client may employ, or otherwise be associated with, one or more instances of each of one or more applications that perform such operations with respect to data. Such clients may comprise physical machines, or virtual machines (VM)

Particularly, devices in the operating environment may take the form of software, physical machines, or VMs, or any combination of these, though no particular device implementation or configuration is required for any embodiment. Similarly, data protection system components such as databases, storage servers, storage volumes (LUNs), storage disks, replication services, backup servers, restore servers, backup clients, and restore clients, for example, may likewise take the form of software, physical machines or virtual machines (VM), though no particular component implementation is required for any embodiment. Where VMs are employed, a hypervisor or other virtual machine monitor (VMM) may be employed to create and control the VMs. The term VM embraces, but is not limited to, any virtualization, emulation, or other representation, of one or more computing system elements, such as computing system hardware. A VM may be based on one or more computer architectures, and provides the functionality of a physical computer. A VM implementation may comprise, or at least involve the use of, hardware and/or software. An image of a VM may take the form of a .VMX file and one or more .VMDK files (VM hard disks) for example.

As used herein, the term 'data' is intended to be broad in scope. Thus, that term embraces, by way of example and not limitation, data segments such as may be produced by data stream segmentation processes, data chunks, data blocks, atomic data, emails, objects of any type, files of any type including media files, word processing files, spreadsheet files, and database files, as well as contacts, directories, sub-directories, volumes, and any group of one or more of the foregoing.

Example embodiments of the invention are applicable to any system capable of storing and handling various types of objects, in analog, digital, or other form. Although terms such as document, file, segment, block, or object may be used by way of example, the principles of the disclosure are not limited to any particular form of representing and storing data or other information. Rather, such principles are equally applicable to any object capable of representing information.

As used herein, the term 'backup' is intended to be broad in scope. As such, example backups in connection with which embodiments of the invention may be employed include, but are not limited to, full backups, partial backups, clones, snapshots, and incremental or differential backups.

### B. Overview

In some IloT environments, a significant amount of compute and storage infrastructure is being deployed at edge locations. Such edge locations may include, for example, factories, retail stores, hotels, bank branches, service stations, and cell towers. Those locations, some of which may be referred to as ROBOs (Remote Office Branch Office), may have their own infrastructure to run local applications, which may be enterprise-specific applications in some cases, and/or to connect to a centralized application that runs at a corporate centralized data center, or in the cloud. The investments in infrastructure, such as processing power and storage capacity, at the edge have tended to grow steadily and at a much faster pace than growth at the edge. For example, according to one study performed by International Data Corporation (IDC), edge compute and storage investments have recently grown at 13% compound annual growth rate (CAGR), as compared with core investments that have grown only at 1.1%. Such growing capacity at the edge is expected to lead to excess storage capacity available at those locations, which may be used, for example, by a central data center for backup of its data.

Embodiments of the invention may leverage such excess storage capacity by using that storage capacity to store a backup copy, or copies, of the datacenter data. These storage operations may use existing compute and storage capacity, and existing communication lines and networks, such that the cost of such a backup from the datacenter to the edge nodes may be minimal. The excess storage capacity may be employed for backing up data of the enterprise that owns and controls the devices that provide the excess storage capacity, and/or, the excess storage capacity may be employed for backing up data of a third party, that is, data of an entity other than the enterprise. In this latter example, the enterprise may charge the third party a fee for use of the excess storage capacity of the enterprise. Various security measures may be implemented to ensure that the data stored in the edge devices is only accessible by the party who owns the data, whether that party be the enterprise or the third party.

For example, a retail store such as Walmart had, at one point in time, about 4,756 stores. Each store has servers and storage. In this example, it may be reasonable to assume that across the various storage types in a given store (for example, storage area network (SAN), network attached storage (NAS), and direct attached storage (DAS)), there may be an average of about 0.5TB available storage, that is, unused storage. Thus, in this example, there would be about 2.378PB of unused storage capacity across all stores. Even if we assumed that there were a need to store each data object twice, to ensure availability for example, there would still be about 1.189PB of unused storage capacity available to store backup data. At current storage cost rates, an equivalent amount of data storage on Amazon S3 would cost Walmart about $300,000 a year. By utilizing existing excess storage capacity, the enterprise may thus realize a major savings that better utilizes existing resources, which the company owns and controls. Further, the company network may offer better read and write performance, for example, than that offered by a public storage site such as Amazon S3.

### C. Further Aspects of Some Example Embodiments

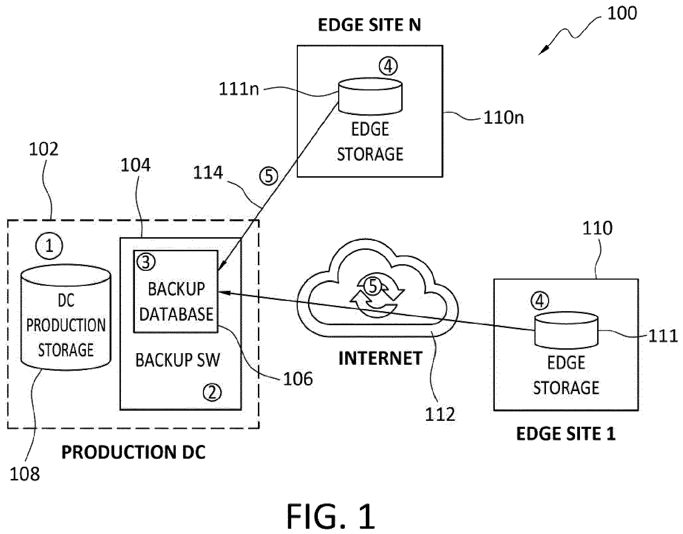

With particular attention now to Figure 1, one example of an operating environment for embodiments of the invention is denoted generally at 100. In general, the operating environment 100 may comprise a production datacenter 102 that may generally operate to backup and store data that is generated in connection with the operations of an enterprise. In this example, the production datacenter 102 may be owned and controlled by the enterprise, although that is not required. The production datacenter 102 may include one or more instances of backup software 104. The backup software 104 may run in a protected manner, such as using a stretched cluster, or may run in an active business continuity and data recovery (BCDR) mode on two or more storage sites associated with the production datacenter 102, one or more of which may be a cloud storage site. The production datacenter 102 may further include a backup database 106 that may operate with the backup software 104, and may be protected in a manner similar to the manner in which the data of the production datacenter 102 is protected. Data backed up at the production datacenter 102 may be stored in datacenter production storage 108.

The datacenter 102 may communicate with one or more edge sites such as edge site 110...110n, where 'n' is any whole number ≥ 1. The edge sites 110...110n may, or may not, be owned and controlled by the same entity that owns and controls the datacenter 102. One or more of the edge sites 110...110n may have respective storage 111...111n. The type and amount of storage at each of the edge sites 110...110n may, or may not, be the same. Example data storage types that may be employed at edge sites such as edge site 110...110n include, but are not limited to, NAS, DAS, and SAN. Additionally, or alternatively, one or more edge sites 110...110n may comprise any type of storage disclosed herein, in any size or amount. The storage 111...111n at the edge sites 110...110n may be used, for example, to store data locally generated at those edge sites 110...110n and/or to store data received from other edge sites. Where data from the datacenter 102, such as data stored in the datacenter production storage 108, is backed up at the edge sites 110...110n, that data may take the form of one or more backup datasets created by the backup software 104 at the datacenter 102. As well, data from the edge sites 110...110n may be stored at the datacenter 102, such as at the datacenter production storage 108 and/or elsewhere at the datacenter 102.

Finally, communications, including transmission of data, back and forth between the datacenter 102 and the edge sites 110...110n may take place by way of various communications links 114 and/or communication networks 112, such as the internet, LAN (local area network), SAN, or WAN (wide area network), for example. As shown in Figure 1, communication by way of a network is not required and in some instances, the datacenter 102 may communicate directly with one or more edge sites, such as 110n for example, by way of respective communication links.

### D. Operational Aspects of Some Example Embodiments

With continued reference to the example of Figure 1, details are provided concerning operational aspects of one or more embodiments of the invention. Initially, the backup software 104 may communicate with the storage devices 111...111n in the edge sites 110...110n to determine the amount of available storage capacity in each edge sites 110...110n. The backup software 104 may then store the information concerning available storage capacity in the backup database 106, as a list of Cᵢ (i = 1...n) for example, where Cᵢ is the respective storage capacity for each of the edge sites 110...110n, and ΣCᵢ is the aggregate available storage capacity across all of the edge sites 110...110n. The storage capacity information may be broken out by storage type, such as NAS, DAS, and SAN for example, although that is not required. Breaking out the storage capacity by type may be useful to a user, such as at the production datacenter 102, who has a need for a particular type and/or mix of storage. In some cases, the edge sites 110...110n may report, on their own initiative, their available storage capacity to the backup software 104.

After the individual and/or aggregate available storage capacity of the edge sites 110...110n has been determined, the backup software 104 may then start performing normal backup processes, such as definition and creation of a backup dataset. Prior to performance of these backup processes however, the backup software 104 may first estimate the amount of data required for the backup to ensure that the data can be accommodated by the excess storage capacity of the edge devices 110...110n. In the event that the required amount of storage needed for a backup exceeds the storage capacity available on all edge sites 110...110n (ΣCi), then either the entire backup, or only the portion of the backup that exceeds the available storage capacity, may be stored elsewhere, such as at a cloud storage site for example.

As part of the backup process, the backup software 104 may split the data in the backup dataset into M chunks where, in some embodiments, M ≤ n, and store those chunks remotely on the storage devices 111...111n. The data may be split in any suitable way. For example, the splitting process may be block-based so as to produce a set of data blocks, or the data may be split on a file basis so that various complete files are stored at different storage devices 111...111n. Thus, the chunks M may or may not be the same size as each other. Information may be generated that indicates the particular way in which the chunks are created, and this information may be used to rebuild the backup copy from the chunks, such as may be done as part of a restore process. The information concerning the way in which the chunks were created and in which edge site they are stored may be stored, such as in the backup database 106 for example.

In the event that the data that is stored at storage devices 111...111n is needed, that data may be recovered from the storage devices 111...111n, and then restored to one or more target devices and/or to the production datacenter 102. The method of operation of the backup software 104 may vary depending upon the type of recovery that is performed.

For example, if a full recovery of the backed up dataset is required, the backup software 104 may read all the required chunks from the storage devices 111...111n, and then rebuild the backup copy using the data chunks that were read out. As another example, if a granular recovery, such as at the block or file level, is required, then the backup software 104 may read only the required chunks, that is, particular blocks or files for example, from the storage devices 111...111n, and may then present the read out chunks to a user as needed.

### E. Example Methods

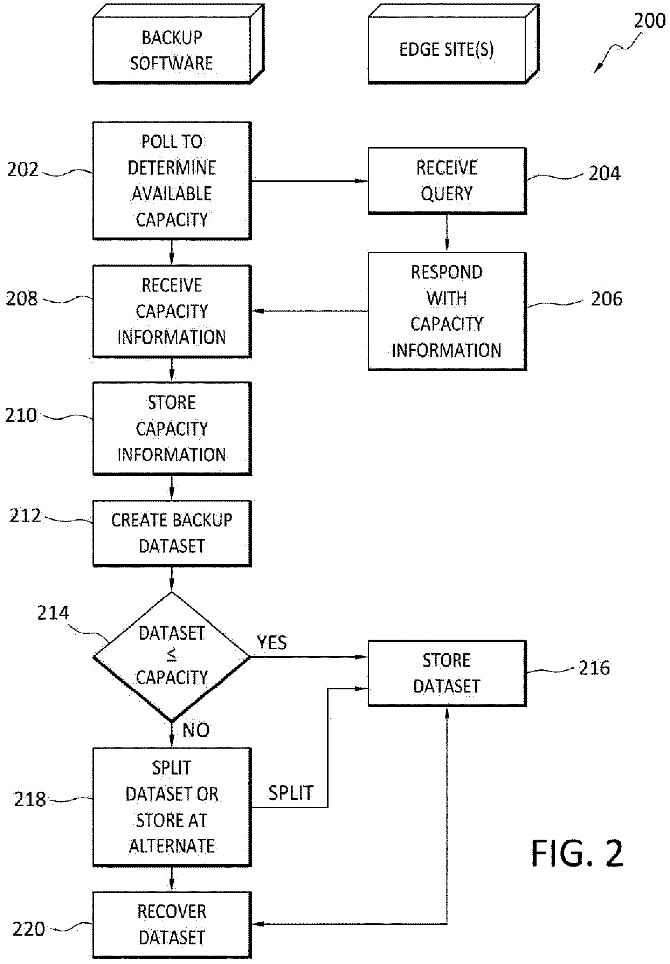

It is noted with respect to the example method of Figure 2 that any of the disclosed processes, operations, methods, and/or any portion of any of these, may be performed in response to, as a result of, and/or, based upon, the performance of any preceding process(es), methods, and/or, operations. Correspondingly, performance of one or more processes, for example, may be a predicate or trigger to subsequent performance of one or more additional processes, operations, and/or methods. Thus, for example, the various processes that may make up a method may be linked together or otherwise associated with each other by way of relations such as the examples just noted.

Directing attention now to Figure 2, the example method 200 may begin when backup software polls 202 one or more edge devices or systems to determine how much storage capacity is available, if any, at each edge device. The edge devices may receive 204 the query from the backup software, and may then respond 206 to the backup software with the available capacity information, which may then be received 208 by the backup software.

At 210, the capacity information received 208 from the edge devices may be stored by the backup software. The backup software may then create 212 a backup dataset for storage at the edge devices. The size of the backup dataset may be compared 214 with the available storage capacity information. If the size of the backup dataset is ≤ the available capacity, the dataset is stored 216 at the edge devices.

On the other hand, if the size of the backup dataset is > than the available capacity, then the backup dataset may be split 218 by the back software and one portion of the backup dataset stored 216 at the edge devices, and another portion of the backup dataset stored at an alternate site 218. In another embodiment, if the size of the backup dataset is > than the available capacity, then the backup dataset may be sent, in its entirety to a storage site, such as a cloud storage site, instead of to the edge devices.

Finally, after the dataset has been stored, whether at one or more edge devices and/or one or more alternate sites, part or all of the dataset may be recovered 220 and restored to one or more targets. The dataset may be recovered 220 in its entirety, or only part of the dataset may be recovered 220. As well, recovery 220 of the dataset, or portion thereof, may be performed at any of various different levels of granularity such as at the block level, file level, or dataset level, for example.

### F. Further Example Aspects of Some Embodiments

Various modifications and enhancements may be implemented with respect to the disclosed methods and processes. For example, to enable more control over the backup system, the methods disclosed herein may be enhanced in multiple ways, some of which may involve tradeoffs between or among various system parameters. These tradeoffs may be tuned, for example, by a system administrator, at a global level or per protected asset, or asset type. The following examples are illustrative.

One possible modification to any of the disclosed methods concerns enhancements to the resilience of data stored at the edge devices. Particularly, the data may be stored in a resilient way across multiple edge sites, such as by duplicating data at multiple different edge sites using a RAID 1 (redundant array of independent disks) array or other method/mechanism. By duplicating data at multiple edge sites, the data may be protected if one of the edge sites fails or is compromised in some way. Because multiple copies of the data are stored at the edge sites however, the available edge site capacity for data storage may thereby be reduced.

Another possible modification to any of the disclosed methods concerns RTO (recovery time objective) optimization. For example, to optimize the time it takes to write a complete backup copy to, or read a complete backup copy from, the associated edge sites, the data transmission parameters of each edge site, such as throughput (for example, bits/sec.) and latency for example, may be considered when chunk sizes for a backup process or restore process are being determined. To illustrate, edge sites with relatively low throughput and/or relatively high latency may be assigned relatively smaller chunks, so that all chunk reads/writes to the edge sites are taking about the same time. That is, relatively larger chunks may be assigned to be stored at relatively closer sites with relatively higher throughput, while relatively smaller chunks may be assigned to be stored at sites with relatively high latency and/or relatively lower throughput. As will be apparent, these chunk assignments may beneficial when a restore process is performed for the same reason(s) that they may be beneficial when the backup to the edge sites is performed, that is, the chunk assignments may be made based on edge site performance parameters to take best advantage of the capabilities of each edge site.

Still another possible modification to any of the disclosed methods concerns cross-site deduplication. Particularly, backup copies may contain numerous repetitions, that is, copies of the same data. The backup software may handle this by only backing up the changes between the point-in-time copies, or by performing deduplication at the backup software level. Another level of deduplication may be added at the assignment of chunks to the edge locations, to reduce or eliminate redundant copies of data as between/among multiple edge sites. This second level of deduplication may be implemented, for example, by the DellEMC PowerProtect Global Scale backup storage solution, although no particular product or solution is required for the secondary deduplication. The first level of deduplication and/or the second level of deduplication may involve, for example, storing a file at the datacenter, and storing any file differentials at one or more edge sites. In another approach, the file may be backed up to one of the edge sites, and differentials or changes in that file may be stored at one or more other edge sites. In general, deduplication may involve, for example, replacing any duplicate data, wherever it is stored, with a pointer that points to the location in storage of the actual data.

Another example modification that may be made to any of the disclosed methods concerns security. Particularly, since remote sites such as edge sites may not be as secure as the production datacenter, the data sent to be stored at the edge sites may be encrypted, prior to transmission from the datacenter to the edge site, by a respective key that is specific to that site and that is managed at the datacenter or another centralized location that includes a key management system (KMS). The data may be stored in encrypted form at the edge site and/or decrypted at the edge site. Similarly, data restored from the edge site may be decrypted prior to transmission back to the datacenter or target restore sites. There may be a tradeoff involved, in terms of processing, with this approach since one or more CPUs at the datacenter and/or edge devices may be needed to encrypt and decrypt the data and these processes may contribute to an increase in the workload of the CPUs.

A final example of a modification that may be implemented with respect to any of the disclosed methods concerns compression. Particularly, the volume of network traffic, such as data traveling between one or more edge sites and a datacenter, may be reduced by applying various compression methods to the data being backed up. One example of such a compression method is Lempel-Ziv compression, although other compression methods may alternatively be employed. There may be a tradeoff involved, in terms of processing, with this approach since one or more CPUs at the datacenter and/or edge devices may be needed to compress the data and these processes may contribute to an increase in the workload of the CPUs. In some embodiments, data compression processes may be adaptive and various heuristics may be applied. For example, a compression rate or compression algorithm may be adapted according to data properties, such as entropy. Entropy may be considered as a limit on the extent to which data may be compressed but still be recoverable with 100% percent fidelity. As another example, data compression may be disabled if it is deemed that the compression is not above a certain threshold, such as 3X for example, for a specific time or period of time. That is, in this example, data compression may be disabled if the data cannot at least be compressed to one third of its uncompressed size. Finally, the compression may be applied with reference to the granularity of the backup. Thus, for example, in a file-level backup, compression may be applied according to parameters such as file type, and/or file size, for example.

### H. Example Computing Devices and Associated Media

The embodiments disclosed herein may include the use of a special purpose or general-purpose computer including various computer hardware or software modules, as discussed in greater detail below. A computer may include a processor and computer storage media carrying instructions that, when executed by the processor and/or caused to be executed by the processor, perform any one or more of the methods disclosed herein, or any part(s) of any method disclosed.

As indicated above, embodiments within the scope of the present invention also include computer storage media, which are physical media for carrying or having computer-executable instructions or data structures stored thereon. Such computer storage media may be any available physical media that may be accessed by a general purpose or special purpose computer.

By way of example, and not limitation, such computer storage media may comprise hardware storage such as solid state disk/device (SSD), RAM, ROM, EEPROM, CD-ROM, flash memory, phase-change memory ("PCM"), or other optical disk storage, magnetic disk storage or other magnetic storage devices, or any other hardware storage devices which may be used to store program code in the form of computer-executable instructions or data structures, which may be accessed and executed by a general-purpose or special-purpose computer system to implement the disclosed functionality of the invention. Combinations of the above should also be included within the scope of computer storage media. Such media are also examples of non-transitory storage media, and non-transitory storage media also embraces cloud-based storage systems and structures, although the scope of the invention is not limited to these examples of non-transitory storage media.

Computer-executable instructions comprise, for example, instructions and data which, when executed, cause a general purpose computer, special purpose computer, or special purpose processing device to perform a certain function or group of functions. As such, some embodiments of the invention may be downloadable to one or more systems or devices, for example, from a website, mesh topology, or other source. As well, the scope of the invention embraces any hardware system or device that comprises an instance of an application that comprises the disclosed executable instructions.

Although the subject matter has been described in language specific to structural features and/or methodological acts, it is to be understood that the subject matter defined in the appended claims is not necessarily limited to the specific features or acts described above. Rather, the specific features and acts disclosed herein are disclosed as example forms of implementing the claims.

As used herein, the term 'module' or 'component' may refer to software objects or routines that execute on the computing system. The different components, modules, engines, and services described herein may be implemented as objects or processes that execute on the computing system, for example, as separate threads. While the system and methods described herein may be implemented in software, implementations in hardware or a combination of software and hardware are also possible and contemplated. In the present disclosure, a 'computing entity' may be any computing system as previously defined herein, or any module or combination of modules running on a computing system.

In at least some instances, a hardware processor is provided that is operable to carry out executable instructions for performing a method or process, such as the methods and processes disclosed herein. The hardware processor may or may not comprise an element of other hardware, such as the computing devices and systems disclosed herein.

In terms of computing environments, embodiments of the invention may be performed in client-server environments, whether network or local environments, or in any other suitable environment. Suitable operating environments for at least some embodiments of the invention include cloud computing environments where one or more of a client, server, or other machine may reside and operate in a cloud environment.

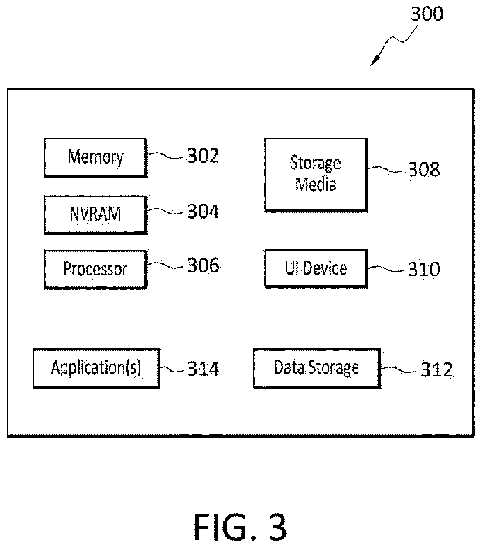

With reference briefly now to Figure 3, any one or more of the entities disclosed, or implied, by Figures 1-2 and/or elsewhere herein, may take the form of, or include, or be implemented on, or hosted by, a physical computing device, one example of which is denoted at 300. As well, where any of the aforementioned elements comprise or consist of a virtual machine (VM), that VM may constitute a virtualization of any combination of the physical components disclosed in Figure 3.

In the example of Figure 3, the physical computing device 300 includes a memory 302 which may include one, some, or all, of random access memory (RAM), non-volatile memory (NVM) 304 such as NVRAM for example, read-only memory (ROM), and persistent memory, one or more hardware processors 306, non-transitory storage media 308, UI device 310, and data storage 312. One or more of the memory components 302 of the physical computing device 300 may take the form of solid state device (SSD) storage. As well, one or more applications 314 may be provided that comprise instructions executable by one or more hardware processors 306 to perform any of the operations, or portions thereof, disclosed herein.

Such executable instructions may take various forms including, for example, instructions executable to perform any method or portion thereof disclosed herein, and/or executable by/at any of a storage site, whether on-premises at an enterprise, or a cloud computing site, client, datacenter, data protection site including a cloud storage site, or backup server, to perform any of the functions disclosed herein. As well, such instructions may be executable to perform any of the other operations and methods, and any portions thereof, disclosed herein.

The described embodiments are to be considered in all respects only as illustrative and not restrictive. The scope of the invention is, therefore, indicated by the appended claims rather than by the foregoing description.

## Claims

1. A method, comprising:
determining (202) a respective available data storage capacity for each of a plurality of edge sites in a group of edge sites;
receiving (208) available data storage capacity information from each of the edge sites;
storing (210) the available data storage capacity information;
creating (212), at a
datacenter, a backup dataset that includes multiple files;
determining (214) whether the group of edge sites have an aggregate amount of available storage capacity to store the backup dataset; and
storing (216) the backup dataset across the edge sites when the aggregate amount of available storage capacity is sufficient to store the entire backup dataset.

2. The method as recited in claim 1, wherein the method is performed at the datacenter.

3. The method as recited in claim 1 or 2, wherein storing the backup dataset across the edge sites comprises splitting the backup dataset on a file level basis, and storing each file of the backup dataset at a different respective edge site.

4. The method as recited in any preceding claim, wherein when the aggregate amount of available storage capacity is insufficient to store the entire backup dataset, then part, or none, of the backup dataset is stored across the edge sites.

5. The method as recited in any preceding claim, further comprising duplicating data at one of the edge sites to another of the edge sites, the duplicated data comprising a portion of the backup dataset.

6. The method as recited in any preceding claim, further comprising deduplicating the backup dataset as the backup dataset is stored across the edge sites.

7. The method as recited in any preceding claim, wherein storing the backup dataset across the edge sites comprises splitting the backup dataset into multiple parts based on a respective latency and/or throughput rate of each of the edge sites, and storing each part of the backup dataset at a different respective edge site.

8. The method as recited in any preceding claim, further comprising encrypting data of the backup dataset before that data is sent to the edge sites, and the data is encrypted with a respective key specific to the edge sites to which the data is sent.

9. The method as recited in any preceding claim, further comprising compressing data of the backup dataset before the backup dataset is stored across the edge sites.

10. The method as recited in any preceding claim, wherein the edges sites, and a datacenter at which the method is performed, are commonly owned and operated.

11. A non-transitory storage medium having stored therein instructions which, when executed by one or more hardware processors, perform the method of any of claims 1-10.

## Patentansprüche

1. Verfahren, umfassend:
Bestimmen (202) einer jeweiligen verfügbaren Datenspeicherkapazität für jede einer Vielzahl von Edge-Sites in einer Gruppe von Edge-Sites;
Empfangen (208) von Informationen über die verfügbare Datenspeicherkapazität von jeder der Edge-Sites;
Speichern (210) der Informationen über die verfügbare Datenspeicherkapazität;
Erstellen (212) eines Sicherungsdatensatzes, der mehrere Dateien enthält, in einer Datenzentrale;
Bestimmen (214), ob die Gruppe von Edge-Sites eine Gesamtmenge an verfügbarer Speicherkapazität zum Speichern des Sicherungsdatensatzes aufweist; und
Speichern (216) des Sicherungsdatensatzes über die Edge-Sites hinweg, wenn die Gesamtmenge an verfügbarer Speicherkapazität ausreicht, um den gesamten Sicherungsdatensatz zu speichern.

2. Verfahren nach Anspruch 1, wobei das Verfahren in der Datenzentrale durchgeführt wird.

3. Verfahren nach Anspruch 1 oder 2, wobei das Speichern des Sicherungsdatensatzes über die Edge-Sites hinweg ein Aufteilen des Sicherungsdatensatzes auf Dateiebenenbasis und Speichern jeder Datei des Sicherungsdatensatzes an einer anderen jeweiligen Edge-Site umfasst.

4. Verfahren nach einem der vorhergehenden Ansprüche, wobei, wenn die Gesamtmenge an verfügbarer Speicherkapazität nicht ausreicht, um den gesamten Sicherungsdatensatz zu speichern, dann der Sicherungsdatensatz nur zum Teil oder gar nicht über die Edge-Sites hinweg gespeichert wird.

5. Verfahren nach einem der vorhergehenden Ansprüche, ferner umfassend ein Duplizieren von Daten an einer der Edge-Sites für eine andere der Edge-Sites, wobei die duplizierten Daten einen Teil des Sicherungsdatensatzes umfassen.

6. Verfahren nach einem der vorhergehenden Ansprüche, ferner umfassend ein Deduplizieren des Sicherungsdatensatzes, wenn der Sicherungsdatensatz über die Edge-Sites hinweg gespeichert wird.

7. Verfahren nach einem der vorhergehenden Ansprüche, wobei das Speichern des Sicherungsdatensatzes über die Edge-Sites hinweg ein Aufteilen des Sicherungsdatensatzes in mehrere Teile basierend auf einer jeweiligen Latenz und/oder Durchsatzrate jeder der Edge-Sites und Speichern jedes Teils des Sicherungsdatensatzes an einer anderen jeweiligen Edge-Site umfasst.

8. Verfahren nach einem der vorhergehenden Ansprüche, ferner umfassend ein Verschlüsseln von Daten des Sicherungsdatensatzes, bevor diese Daten an die Edge-Sites gesendet werden, und wobei die Daten mit einem jeweiligen Schlüssel verschlüsselt werden, der für die Edge-Sites spezifisch ist, an die die Daten gesendet werden.

9. Verfahren nach einem der vorhergehenden Ansprüche, ferner umfassend ein Komprimieren von Daten des Sicherungsdatensatzes, bevor der Sicherungsdatensatz über die Edge-Sites hinweg gespeichert wird.

10. Verfahren nach einem der vorhergehenden Ansprüche, wobei die Edge-Sites und eine Datenzentrale, in der das Verfahren durchgeführt wird, gemeinsam besessen und betrieben werden.

11. Nichtflüchtiges Speichermedium mit darin gespeicherten Anweisungen, die bei Ausführung durch einen oder mehrere Hardwareprozessoren das Verfahren nach einem der Ansprüche 1-10 durchführen.

## Revendications

1. Procédé, comprenant :
la détermination (202) d'une capacité de stockage de données disponible respective pour chacun d'une pluralité de sites périphériques dans un groupe de sites périphériques ;
la réception (208) d'informations de capacité de stockage de données disponible de chacun des sites périphériques ;
le stockage (210) des informations de capacité de stockage de données disponible ;
la création (212), dans un centre de données, d'un ensemble de données de sauvegarde qui comporte plusieurs fichiers ;
la détermination (214) si le groupe de sites périphériques a une quantité globale de capacité de stockage disponible pour stocker l'ensemble de données de sauvegarde ; et
le stockage (216) de l'ensemble de données de sauvegarde sur les sites périphériques lorsque la quantité globale de capacité de stockage disponible est suffisante pour stocker l'intégralité de l'ensemble de données de sauvegarde.

2. Procédé selon la revendication 1, dans lequel le procédé est exécuté au centre de données.

3. Procédé selon la revendication 1 ou 2, dans lequel le stockage de l'ensemble de données de sauvegarde sur les sites périphériques comprend la division de l'ensemble de données de sauvegarde au niveau du fichier et le stockage de chaque fichier de l'ensemble de données de sauvegarde sur un site périphérique respectif différent.

4. Procédé selon une quelconque revendication précédente, dans lequel lorsque la quantité globale de capacité de stockage disponible est insuffisante pour stocker l'intégralité de l'ensemble de données de sauvegarde, une partie, ou aucune, de l'ensemble de données de sauvegarde est stockée sur les sites périphériques.

5. Procédé selon une quelconque revendication précédente, comprenant en outre la duplication de données sur l'un des sites périphériques vers un autre des sites périphériques, les données dupliquées comprenant une partie de l'ensemble de données de sauvegarde.

6. Procédé selon une quelconque revendication précédente, comprenant en outre la déduplication de l'ensemble de données de sauvegarde lorsque l'ensemble de données de sauvegarde est stocké sur les sites périphériques.

7. Procédé selon une quelconque revendication précédente, dans lequel le stockage de l'ensemble de données de sauvegarde sur les sites périphériques comprend la division de l'ensemble de données de sauvegarde en plusieurs parties sur la base d'une latence et/ou d'un débit respectifs de chacun des sites périphériques, et le stockage de chaque partie de l'ensemble de données de sauvegarde sur un site périphérique respectif différent.

8. Procédé selon une quelconque revendication précédente, comprenant en outre le cryptage des données de l'ensemble de données de sauvegarde avant que les données ne soient envoyées aux sites périphériques, et les données sont chiffrées avec une clé respective spécifique aux sites périphériques auxquels les données sont envoyées.

9. Procédé selon une quelconque revendication précédente, comprenant en outre la compression de données de l'ensemble de données de sauvegarde avant le stockage de l'ensemble de données de sauvegarde sur les sites périphériques.

10. Procédé selon une quelconque revendication précédente, dans lequel les sites périphériques et un centre de données dans lequel le procédé est exécuté, sont détenus et exploités en commun.

11. Support de stockage non transitoire dans lequel sont stockées des instructions qui, lorsqu'elles sont exécutées par un ou plusieurs processeurs matériels, exécutent le procédé selon l'une quelconque des revendications 1 à 10.
